# EUROPEAN PATENT SPECIFICATION

(11) **EP 3 179 626 B1**
(45) Date of publication and mention of the grant of the patent: **22.06.2022**
(21) Application number: 16194305.5
(22) Date of filing: 18.10.2016
(51) Int. Cl.: H02P 29/028, H02H 7/122, H02P 27/06, H02P 29/032, H02M 1/32

(54) **ELECTRICAL DRIVE SYSTEM**
ELEKTRISCHES ANTRIEBSSYSTEM
SYSTÈME DE COMMANDE ÉLECTRIQUE

(30) Priority: 06.11.2015 GB 201519628
(43) Date of publication of application: 14.06.2017
(73) Proprietor: J and M Ferranti Technology Limited, Llanfairfechan LL33 0HS (GB)
(72) Inventor: de Ferranti, James Ziani, Llanfairfechan, LL33 0HS (GB)
(74) Representative: Hamilton, Alistair

(56) References cited:
- EP-A2- 0 431 492
- EP-A2- 0 833 422
- US-A1- 2009 161 277

## Description

This invention relates to an electrical drive system. It has particular, but not exclusive, application to a drive system that serves as a backup for another drive system such as an electrical backup drive for a main drive of an aircraft.

More generally, embodiments of the invention might be used in many applications that require the use of a controller and inverter to provide electrical power to a device, typically a motor, especially a permanent-magnet motor or switched reluctance motor that will provide mechanical power (or generate electrical power in the case of a reversible starter generator or generator system) in aerospace and other sectors.

Such applications are ever more common as existing brushed systems are replaced by brushless systems and electrification/hybridisation of aircraft continues to increase. Examples in addition to back-up drives include electric wheels to provide propulsion to aircraft on ground, electrohydrostatic actuators, backup generators, brushless starter generators and back up motors.

EP-A-2 735 507 and DE-U-202008002249 disclose electrical drive systems that can transmit drive to the rotors in the event of a main engine failure. In aeronautic applications, this can provide a pilot with additional control over an aircraft with a failed main engine than would be available during a period of flight that relied on glide or auto-rotation alone.

Failure of a main drive is quite a rare event. It is essential that the risk the electrical drive system itself should cause a problem that might threaten flight safety be "extremely improbable", within the meaning of FAA Advisory Circular (AC) AC 25.1309-1, i.e., < 10⁻⁹ per flight hour. (Note that this is very much stricter than the design aim that the risk an electrical drive system be unable to provide electrical power in the event of main engine failure since this a: is highly unlikely to coincide with a main drive failure and b: is not, of itself, a threat to safety.)

The main functional units of an electrical drive system of the type to which this invention relates are a source of electrical power (typically but not necessarily a re-chargeable battery), a motor (typically but not necessarily a permanent magnet electric motor), and control circuitry that interconnects the source of power and the motor. The control circuitry provides electrical power in a form required to drive the motor, and may include a power inverter to convert a DC output of the power source to AC as required by the motor.

If the power source is AC, the same topology for the control circuitry can be used to provide a DC output that will then be transformed into AC again to drive the motor It is first necessary to understand the reason why the electrical drive system might be a source of risk.

In a typical application, an electrical backup drive being a particular example, a permanent magnet motor is attached to a rotating energy source and a short circuit would result in heating of one or more electrical component. In many cases, this includes an electric motor that is permanently connected to a main drive train through a free wheel.

The electrical back up drive also includes a battery energy source. A short circuit can therefor occur on either the motor side or the battery side.

During normal operation, by virtue of the presence of the free wheel, this arrangement does not transmit drive from the main drive to the electric motor. In the event of failure of the free wheel, an event that is known to happen on occasion, the electric motor may become driven by the main drive system, and (in the typical case of a permanent magnet motor) effectively become an electrical generator. If the electric drive system is in its standby mode (that is, the normal mode when the main drive is functioning correctly) the electric motor will be open circuit, current will not flow, and the risk that a short circuit or other dangerous condition will develop will be negligible. The system may slowly heat up due to iron losses in the electric motor. However, should a random short circuit occur in a winding or a switch, current driven by the motor may then flow, causing a lot of heat to be generated, very quickly leading to elevated temperature, an inherently undesirable situation that carries particular risk in aeronautical applications.

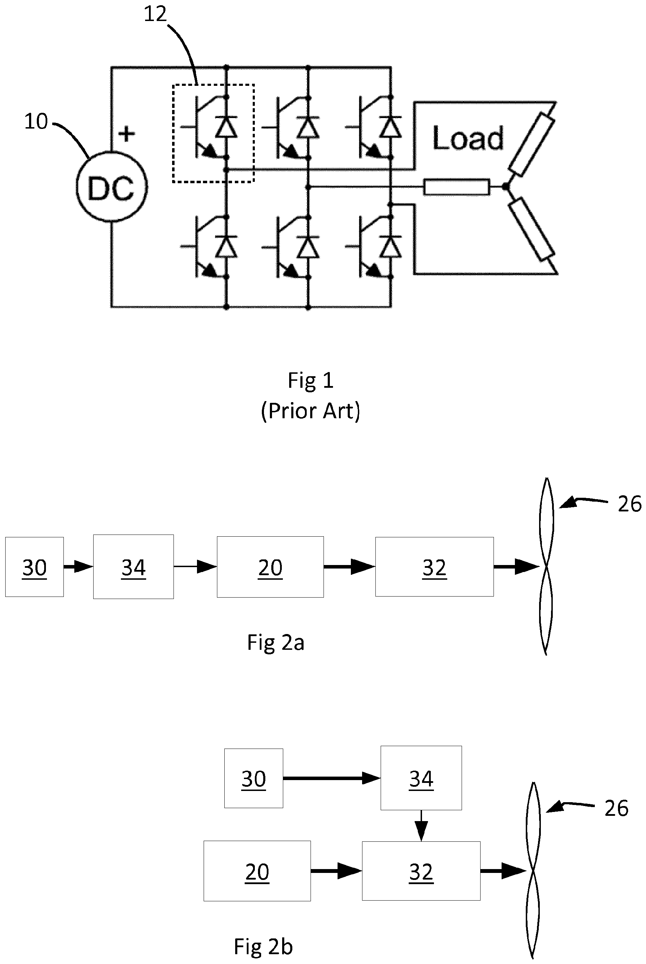

A typical electrical drive system incorporating a 3-phase inverter is shown in Figure 1. A drive circuit, not shown, drives each of the 9 switches to generate the required AC output. Drive systems having such a layout have widespread application because they are efficient and easy to manufacture using commercial, off-the-shelf components. However, such a system will fail if any of the switches should fail to operate, either through failure of the switch itself or through failure of the driver: this can cause a switch to fail to open-circuit (causing the backup drive to become unavailable) or short-circuit (giving rise to the potential for overheating and fire).

US 2009/0161277 A1 discloses device includes at least one semiconductor switching circuit connected to a power source and a load and at least one breaker switch integrated with the at least one semiconductor switching circuit. The breaker circuit may be connected in series with the at least one semiconductor switching circuit and the at least one breaker switch is configured to create an open circuit in less than about twenty microseconds of receipt of a predetermined threshold of semiconductor switch current to prevent damage to the at least one semiconductor switching circuit or housing.

An aim of this invention is to provide a backup drive system that has improved reliability, both in availability and in resistance to unsafe operation, than conventional drive systems.

From a first aspect, this invention provides a drive circuit operable to receive power from a DC power source and apply AC drive power to a motor at a working current and voltage, which drive circuit includes at least one power inverter and a controller for the power inverter:
a) wherein the power inverter has:
   - a number *p, where p ≥* 1 of phase outputs, driven by a number *n*, where *n ≥* 2, of switching legs, each of which switching legs includes:
      - two series-connected half-legs the phase output being connected between the half-legs, each half-leg:
         - including a number *s*, where *s* > 1, of series-connected switching stages, each of which is capable of operating at the working voltage divided by *s* -1;
      - and *n* -1 legs are capable of delivering the working current of a phase; and
b) wherein the controller has a plurality of independent drivers, each switch within a phase being controlled by a different one of the plurality of drivers.

By this arrangement, should any switch fail open-circuit, no more than one leg is disabled and the other legs can provide the working output current and voltage of the affected phase. Also, should any switch fail short-circuit, the other drivers and associated switches of the leg containing that switch can cause the other switches in that leg to open, so preventing potentially harmful current flowing through that leg. It should be noted that, in this context, "capable" applied to the components of the controller is intended to mean capable within their safe or rated operating parameters.

In preferred embodiments, each switch is independently driven by a respective independent driver circuit.

In most typical embodiments of the invention, *p* = 3, although embodiments may find application to single-phase systems (*p* = 1) or polyphase systems (*p* > 2).

The system can operate for any *n ≥* 2. It will be seen that for smaller *n* the current-handling capacity of each individual leg has to increase (for *n* = 2, each leg must be capable of handling the full working current), while for larger *n*, the complexity of the control circuitry increases. In many embodiments, *n* = 3 may be preferred.

For the typical case, s = 2, each switching stage must be capable of operating at the working voltage.

In preferred embodiments, each switch is a solid-state semiconductor device, such as an insulated gate bipolar transistor (IGBT) or a MOSFET.

It will be understood by those skilled in the technical field that the optimum values of *n, p* and s in any particular embodiment of the invention will depend upon the application to which the embodiment will be applied and the particular aims to be achieved as regards prevention of dangerous operating conditions, availability and fault isolation, amongst other design considerations.

Preferably, the drive circuit further includes a current sensor on each phase output. These sensors can be used in diagnostic testing to determine the operational status of the drive circuit.

A typical drive circuit further includes a control unit that can cause any selected one half leg to be in a conducting or a non-conducting state.

Electric and magnetic parts of the drive circuit are electrically isolated from each other, to voltage appropriate for the operating voltage with a duplex approach. That is to say, two physical barriers to electrical conduction are provided on each part, whether that be on a conductor, a housing or a stator. This further reduces the risk of a fire occurring as a result of electrical conduction through unintended conductive paths.

From a second aspect, this invention provides an electric backup drive comprising:
a) a DC power source;
b) an AC motor; and
c) a drive circuit that is an embodiment of the first aspect of the invention.

In a typical application, a backup drive embodying this aspect of the invention is a component of the flight systems of an aircraft.

From a third aspect, this invention provides a method of operating a drive circuit embodying the first aspect of the invention comprising a testing phase in which a selected one or more switches or half legs to a predetermined configuration will cause a predictable state on the phases outputs allowing measurement of the current and/or voltage to determine whether the current and/or voltage is in accordance with the predetermined state.

In the event that the current and/or voltage on a phase output is not in accordance with the predetermined state, a corresponding switch or half-leg may be determined as having failed either in an open-circuit state or in a voltage blocking failure state. Where it is determined that a switch or half-leg has entered a failure state, the drive circuit as a whole is typically identified as being in a failure mode and the faulty leg can be disabled.

An embodiment of the invention will now be described in detail, by way of example, and with reference to the accompanying drawings, in which:
Figure 1 shows a conventional arrangement of a three-phase motor being driven by a battery connected through an inverter;
Figures 2a and 2b are block diagrams of a power trains that include an electrical backup drive;
Figure 3 is a circuit diagram of a drive system embodying the invention;
Figure 4 is a half-leg of a switching leg of the drive system shown in Figure 3;
Figure 5 shows the drive circuit of the embodiment of Figure 3 undergoing a conduction test;
Figure 6 shows the drive circuit of the embodiment of Figure 3 undergoing a voltage blocking test;
Figure 7 is a state diagram of a built-in test sequence of an inverter being part of the circuit of the embodiment of Figure 3; and

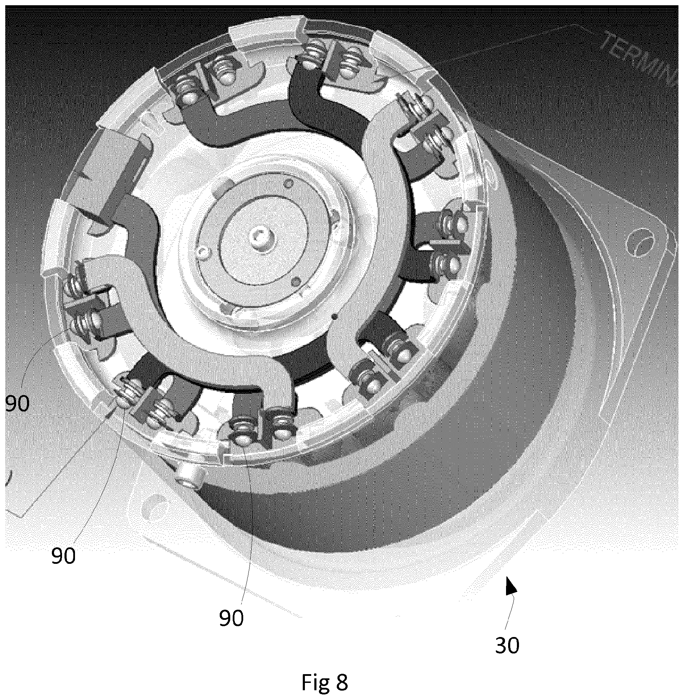

Figure 8 is a motor being part of the embodiment of Figure 3.

With reference first to Figure 1, in a conventional three-phase inverter, each phase is driven from a DC power source 10 by a pair of switching stages 12. Each switching stage 12 includes a single switching device, typically an insulated gate bipolar transistor (IGBT). Other embodiments may have several switching devices in parallel. The switching stages may include additional components, such as a diode to protect the switches against back-EMF arising from the load. The switching device and additional components are all prone to failure, and can potentially result in the switching stage entering either an open-circuit or a short-circuit state.

The present embodiment of the invention has application to an aeronautical drive system, which will be described briefly with reference to Figure 2a.

The drive system includes a main mechanical power unit 20. The mechanical power unit 20 is connected through a gear train to a main gearbox 32. From there, drive is taken to the various rotary driven elements 26. To provide a backup drive, an electric motor 30 is connected through a freewheel 34 to the main power unit and then to the input of the main gearbox 32. Alternatively, as shown in Figure 2b, the electric motor 30 may be connected through a freewheel 34 to a separate input to the main gearbox 32.

In normal operation, the mechanical power unit is turning 20 and the freewheel 34 is overrunning, thereby allowing the electric motor 30 to remain at rest. In the event of failure of the mechanical power unit, the electric motor 30 is started and it transmits drive to the main gearbox 32through the freewheel 34.

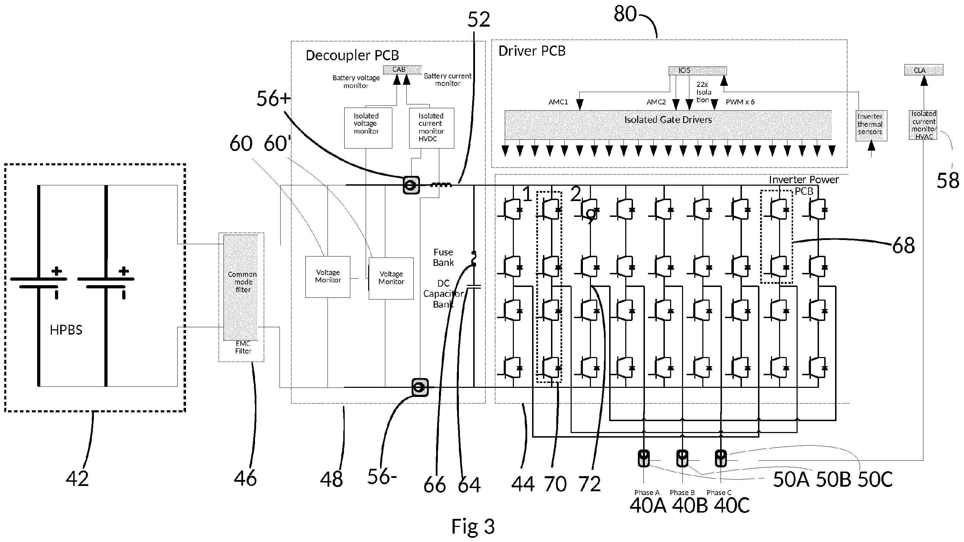

With reference to Figure 3, a drive system embodying the invention will now be described.

The object of the drive system is to provide a three-phase AC supply to a permanent magnet motor. The three output phases are shown at 40_{A}, 40_{B} and 40_{C}. The source of power is a high-power battery system 42 that is connected to a power inverter stage 44 through a filter stage 46 and a decoupling stage 48. Each output phase 40_{A}, 40_{B} and 40_{C} is provided with a respective current sensor 50_{A}, 50_{B} and 50_{C} that send signals to a current monitor 58.

The battery system 42 has positive and negative output rails which are connected to an input of the filter stage 46. The filter stage 46 includes a common-mode filter to minimise noise introduced into the DC system from other nearby electrical and electronic devices.

Positive and negative output rails from the filter stage are connected to an input of the decoupling stage 48. The rails pass through the decoupling stage 48 through a series-connected inductor 52. Within the decoupling stage 48, each rail is inductively connected at 56⁺ and 56⁻ to a current monitor 54, which is isolated for DC from the rails. Voltage monitors 60, 60' are connected across the rails and provide a signal to an isolated voltage monitor 62. A capacitor bank 64 with appropriate redundancy is connected through a fuse 66 across the positive and negative rails at the output of the decoupling stage 48.

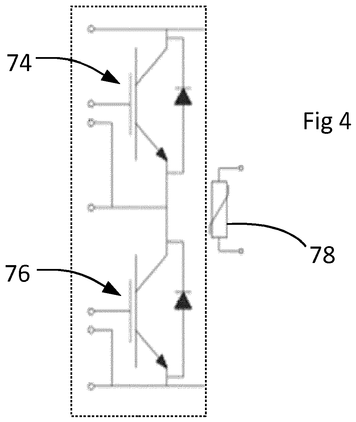

Positive and negative output rails of the decoupling stage 48 are connected as an input to the power inverter stage 44. Within the power inverter stage, nine similar switching legs, one of which is indicated at 70, are connected across the rails. Each leg includes two half-legs connected in series, an example being indicated at 68, and each of which is as shown in Figure 4.

Each half-leg 68 includes first and second switching devices being insulated-gate bipolar transistors (IGBT) 74, 76, the emitter of the first being connected to the collector of the second. The gates of the first and second IGBTs are connected to independent drive lines. Each half-leg also includes a temperature sensing device, a thermistor, in this case, 78 that is responsive to the temperature of the IGBTs 74, 76.

The output of each switching leg 70 is derived from the common point between the two half-legs 68, an example output being indicated at 72. In this example, if the switching legs are numbered consecutively from 1 to 9, the first output phase 40_{A} is connected to the common points 72 of legs 1, 4 and 7, the second output phase 40_{B} is connected to the common points 72 of legs 2, 5 and 8, the first output phase 40c is connected to the common points 72 of legs 3, 6 and 9.

The system further includes a driver stage 80. The driver stage 80 has multiple IGBT driver output lines 82, each of which is connected to the gates of the respective switches, that allow for an individual switching devices to be turned on or off. The driver stage 80 also receives an input from the temperature sensing device 78 of each of the half-legs 68 for automatic protection or feedback to the controller.

When considering the operation of the power inverter, each half-leg 68 should be thought of as behaving as one of the switching devices of a conventional power inverter. Thus, by switching each half-leg 68 using the same sequence as the individual switching devices of a conventional inverter, the power inverter stage 44 operates essentially as a conventional power inverter while all of the switching devices 74, 76 are operating properly.

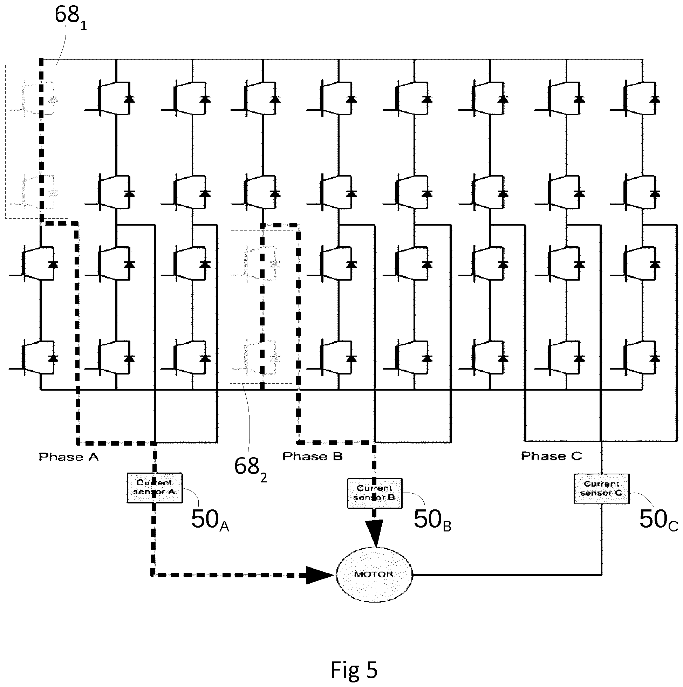

One benefit provided by embodiments of this invention is the ability to perform self-testing. With reference to Figure 5, conducting paths are shown by dotted lines and non-conducting paths are shown in solid lines. In order to establish that a switching leg is operating, selected half-legs 68₁, 68₂ are turned on, and the output from the associated current sensor 50_{A}, 50_{B}, 50_{C} is examined. In the illustrated example, the sensors 50_{A}, 50_{B} detect current, which indicates that the selected half-legs are operational. Had either sensor 50_{A}, 50_{B} detected no current, that would indicate that the selected half-leg 68₁, 68₂ had failed open circuit. The test procedure is repeated for each half-leg in the power inverter stage 44.

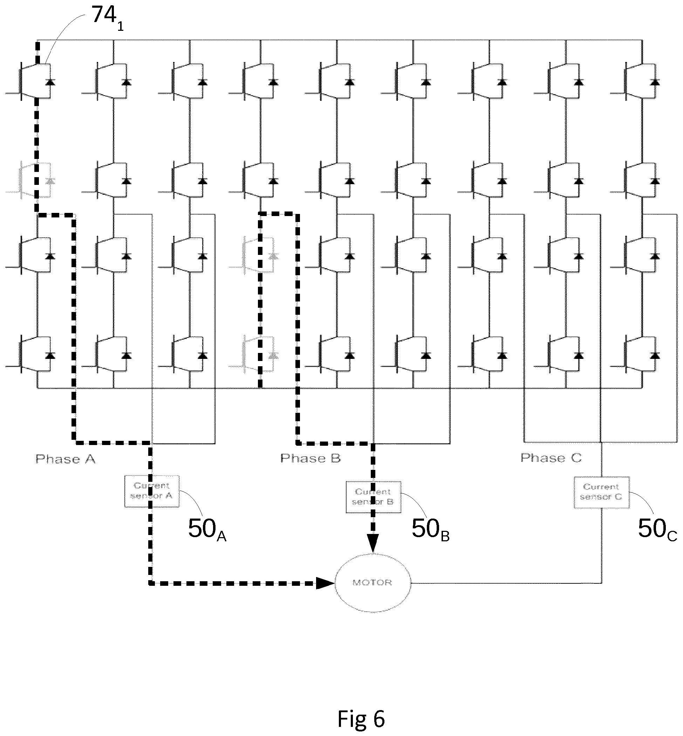

Similarly, it is possible to test that each switching device 74, 76 is capable of blocking the full operative voltage by switching off one selected switching device 74₁ of a half-leg, and then verifying that the associated current sensor 50_{A} detects no current. This is illustrated in Figure 6. If current is detected, then it can be concluded that the selected switching device 74₁ has failed to the extent that it can no longer block the full operating voltage.

In the situation described in each of the last two preceding paragraphs, if it is determined that a switching device 74, 76 has failed, the inverter enters a failure mode. This does not, however, mean that the inverter is not operational. In the first case, if just one half-leg 68 has failed open-circuit, the other switching legs 70 of the phase can supply the required current, and the overall operation of the drive circuit need not alter. In the second case, the other switching device 74, 76 of the half-leg 68 should still be able to block the voltage, and the leg 70 of which that half-leg 68 is a component is taken out of service.

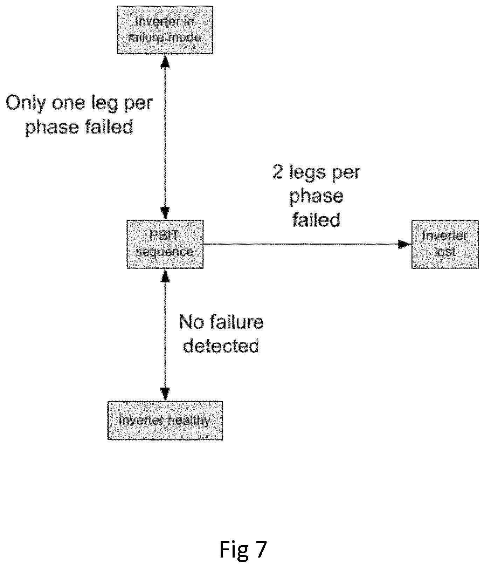

The above tests can be carried out to test each half-leg 68 and switching device 74, 76 in turn as part of a power-up or periodic built-in test, illustrated in Figure 7. There are three possible outcomes at the conclusion of the test:
- no failure is detected - the inverter is healthy;
- no more than one leg of any phase has failed - the inverter is in failure mode, but is nonetheless operational; or
- more than one leg of any phase has failed - function of the inverter is lost.

In failure mode, the inverter can continue to operate without any change in operating procedure, but the requirement for urgent maintenance is noted. The test can be performed at any time that the inverter is not actually being used to power a load, so failure can be determined in advance of use of the inverter becoming essential in an emergency situation.

As a further precaution against fire, the motor 30 may be a permanent magnet motor that includes internally fuse links 90 through which the current supplied to each phase must pass. For example, the fuse links may be zamak: a highly conductive and low melting point zinc-aluminium alloy, or solder material with appropriate melting point for the application. The fuse links 90 are intended to melt before excessive heat can be generated in the motor 30 in the event of failure of the freewheel 32. Providing the links internally of the motor means that it can be used as a direct replacement for a conventional motor without the requirement to alter existing drive circuitry, thereby enhancing the safety of a pre-existing conventional back-up drive system.

## Claims

1. A drive circuit operable to receive power from a DC power source (10) and apply AC drive power to a motor (30) at a working current and voltage, which drive circuit includes at least one power inverter (44) and a controller for the power inverter:
a) wherein the power inverter has:
• a number *p*, where *p ≥* 1, of phase outputs (40_{A}, 40_{B}, 40_{C}), each driven by a number *n*, where *n ≥* 2, of switching legs (70), each of wherein which switching legs includes:
• two series-connected half-legs (68) the phase output being connected (72) between the half-legs, **characterised by** each half-leg including:
• a number s, where s > 1, of series-connected switching stages (74, 76), each of which is capable of operating at the working voltage divided by *s* - 1;
• and *n* - 1 legs are capable of delivering the working current of a phase; and
b) wherein the controller has a plurality of independent drivers (80), each switch within a phase being controlled by a different one of the plurality of drivers.

2. A drive circuit according to claim 1 in which *p* = 3.

3. A drive circuit according to claim 1 or claim 2 in which *n* = 3.

4. A drive circuit according to any preceding claim in which *s* = 2.

5. A drive circuit according to any preceding claim in which each switching stage includes an insulated gate bipolar transistor or a MOSFET.

6. A drive circuit according to any preceding claim having a current sensor (50_{A}, 50_{B}) on each phase output.

7. A drive circuit according to any preceding claim in which each switch is independently driven by a respective independent driver circuit (80).

8. A drive circuit according to any preceding claim further including a control unit that can cause any selected one half leg (68) to be in a conducting or a non-conducting state.

9. An electric backup drive comprising:
a) a DC power source (10);
b) an AC motor (30); and
c) a drive circuit according to any preceding claim.

10. An electrical backup drive according to claim 9 in which the AC motor is a permanent magnet motor.

11. An electric backup drive according to any preceding claim being a component of the flight systems of an aircraft.

12. A method of operating a drive circuit according to any one of claims 1 to 9 comprising a testing phase in which a selected switch or one or more half leg (68) to a predetermined configuration that will cause a predictable state on the phases outputs (40_{A}, 40_{B}, 40c) and measuring the current and/or voltage to determine whether the current and/or voltage is in accordance with the predictable state.

13. A method of operating a drive circuit according to claim 12 in which in the event that the current and/or voltage on a phase output is not in accordance with the predictable state a corresponding a switch or half-leg is determined as having failed either in an open-circuit state or in a voltage blocking failure state.

14. A method of operating a drive circuit according to claim 13 in which, where it is determined that a switch or half-leg has entered a failure state, the drive circuit is identified as being in a failure mode.

## Patentansprüche

1. Treiberschaltung, die funktionsfähig ist, um Leistung von einer DC-Leistungsquelle (10) zu empfangen und AC-Antriebsleistung an einen Motor (30) mit Betriebsstrom und Betriebsspannung anzulegen, wobei die Treiberschaltung mindestens einen Wechselrichter (44) und eine Steuerung für den Wechselrichter beinhaltet:
a) wobei der Wechselrichter Folgendes aufweist:
• eine Anzahl *p,* wobei *p ≥* 1, von Phasenausgängen (40_{A}, 40_{B}, 40c), die jeweils von einer Anzahl *n* angetrieben werden, wobei *n ≥* 2, von Schaltzweigen (70), wobei jeder der Schaltzweige Folgendes beinhaltet:
• zwei in Reihe geschaltete Halbzweige (68), wobei der Phasenausgang zwischen die Halbzweige geschaltet (72) ist, **dadurch gekennzeichnet, dass** jeder Halbzweig Folgendes beinhaltet:
• eine Anzahl s, wobei s > 1, von in Reihe geschalteten Schaltstufen (74, 76), wovon jede mit der durch s-1 geteilten Betriebsspannung betrieben werden kann;
• und *n* -1 Schenkel in der Lage sind, den Betriebsstrom einer Phase zu liefern; und
b) wobei die Steuerung eine Vielzahl von unabhängigen Treibern (80) aufweist, wobei jeder Schalter innerhalb einer Phase durch einen anderen der Vielzahl von Treibern gesteuert wird.

2. Treiberschaltung nach Anspruch 1, bei der *p* = 3.

3. Treiberschaltung nach Anspruch 1 oder Anspruch 2, bei der *n* = 3.

4. Treiberschaltung nach einem vorherigen Anspruch, bei der s = 2.

5. Treiberschaltung nach einem vorherigen Anspruch, bei der jede Schaltstufe einen Bipolartransistor mit isoliertem Gate oder einen MOSFET beinhaltet.

6. Treiberschaltung nach einem vorherigen Anspruch, die einen Stromsensor (50_{A}, 50_{B}) an jedem Phasenausgang aufweist.

7. Treiberschaltung nach einem vorherigen Anspruch, bei der jeder Schalter unabhängig durch eine entsprechende unabhängige Treiberschaltung (80) angetrieben wird.

8. Treiberschaltung nach einem vorherigen Anspruch, die ferner eine Steuereinheit beinhaltet, die einen ausgewählten Halbzweig (68) in einen leitenden oder einen nichtleitenden Zustand versetzen kann.

9. Elektrischer Hilfsantrieb, umfassend:
a) eine DC-Leistungsquelle (10);
b) einen AC-Motor (30); und
c) eine Treiberschaltung nach einem vorherigen Anspruch.

10. Elektrischer Hilfsantrieb nach Anspruch 9, bei dem der AC-Motor ein Permanentmagnetmotor ist.

11. Elektrischer Hilfsantrieb nach einem vorherigen Anspruch, der eine Komponente der Flugsysteme eines Flugzeugs ist.

12. Verfahren zum Betreiben einer Treiberschaltung nach einem der Ansprüche 1 bis 9, umfassend eine Testphase, in der ein ausgewählter Schalter oder ein oder mehrere Halbzweige (68) in eine vorbestimmte Konfiguration gebracht werden, die einen vorhersehbaren Zustand an den Phasenausgängen (40_{A}, 40_{B}, 40_{C}) bewirkt, und Messen des Stroms und/oder der Spannung, um zu bestimmen, ob der Strom und/oder die Spannung mit dem vorhersehbaren Zustand übereinstimmt.

13. Verfahren zum Betreiben einer Treiberschaltung nach Anspruch 12, bei dem für den Fall, dass der Strom und/oder die Spannung an einem Phasenausgang nicht mit dem vorhersehbaren Zustand übereinstimmt, ein entsprechender Schalter oder Halbzweig entweder in einem Leerlaufzustand oder in einem spannungssperrenden Fehlerzustand als ausgefallen bestimmt wird.

14. Verfahren zum Betreiben einer Treiberschaltung nach Anspruch 13, bei dem, wenn festgestellt wird, dass ein Schalter oder ein Halbzweig in einen Fehlerzustand eingetreten ist, die Treiberschaltung als in einem Fehlermodus befindlich identifiziert wird.

## Revendications

1. Circuit de commande utilisable pour recevoir de la puissance d'une source de puissance CC (10) et appliquer une puissance de commande CA à un moteur (30) à un courant et une tension de travail, ledit circuit de commande comprenant au moins un onduleur de puissance (44) et un dispositif de commande pour l'onduleur de puissance :
a) ledit onduleur de puissance comportant :
• un nombre *p,* où *p ≥*1, de sorties de phase (40_{A}, 40_{B}, 40c), chacune commandée par un nombre *n,* où *n ≥* 2, de branches de commutation (70), chacune de ces branches de commutation comprenant :
• deux demi-branches (68) montées en série, la sortie de phase étant connectée (72) entre les demi-branches, **caractérisé en ce que** chaque demi-branche comprend :
• un nombre s, où s > 1, d'étages de commutation (74, 76) montés en série, chacun desquels pouvant fonctionner à la tension de travail divisée par s - 1 ;
• et *n* - 1 branches pouvant délivrer le courant de travail d'une phase ; et
b) ledit dispositif de commande comportant une pluralité de pilotes indépendants (80), chaque commutateur dans une phase étant commandé par un pilote différent parmi la pluralité de pilotes.

2. Circuit de commande selon la revendication 1, dans lequel *p* = 3.

3. Circuit de commande selon la revendication 1 ou la revendication 2, dans lequel *n* = 3.

4. Circuit de commande selon l'une quelconque des revendications précédentes, dans lequel s = 2.

5. Circuit de commande selon l'une quelconque des revendications précédentes, chaque étage de commutation comprenant un transistor bipolaire à grille isolée ou un MOSFET.

6. Circuit de commande selon l'une quelconque des revendications précédentes comportant un capteur de courant (50_{A}, 50_{B}) sur chaque sortie de phase.

7. Circuit de commande selon l'une quelconque des revendications précédentes, chaque commutateur étant commandé indépendamment par un circuit pilote indépendant respectif (80).

8. Circuit de commande selon l'une quelconque des revendications précédentes, comprenant en outre une unité de commande qui peut amener n'importe quelle demi-branche sélectionnée (68) à être dans un état conducteur ou non conducteur.

9. Commande électrique de secours comprenant :
a) une source de puissance CC (10) ;
b) un moteur CA (30) ; et
c) un circuit de commande selon l'une quelconque des revendications précédentes.

10. Commande électrique de secours selon la revendication 9, ledit moteur CA étant un moteur à aimant permanent.

11. Commande électrique de secours selon l'une quelconque des revendications précédentes qui est un composant des systèmes de vol d'un aéronef.

12. Procédé de fonctionnement d'un circuit de commande selon l'une quelconque des revendications 1 à 9, comprenant une phase de test dans laquelle un commutateur sélectionné ou une ou plusieurs demi-branches (68) à une configuration prédéfinie qui provoquera un état prévisible sur les sorties de phases (40_{A}, 40_{B}, 40c) et de mesure du courant et/ou de la tension pour déterminer si le courant et/ou la tension est conforme à l'état prévisible.

13. Procédé de fonctionnement d'un circuit de commande selon la revendication 12, dans le cas où le courant et/ou la tension sur une sortie de phase n'est pas conforme à l'état prévisible un commutateur correspondant ou une demi-branche correspondante étant déterminé comme ayant échoué soit dans un état de circuit ouvert soit dans un état de défaillance de blocage de tension.

14. Procédé de fonctionnement d'un circuit de commande selon la revendication 13, lorsqu'il est déterminé qu'un commutateur ou une demi-branche est entré dans un état de défaillance, le circuit de commande étant identifié comme étant dans un mode de défaillance.
